Europäisches Patentamt

European Patent Office

Office européen des brevets

(11) Veröffentlichungsnummer: **0 154 672**
**A2**

(12) ## EUROPÄISCHE PATENTANMELDUNG

(21) Anmeldenummer: **84109257.0**

(22) Anmeldetag: **03.08.84**

(51) Int. Cl.⁴: **F 41 G 5/14**

(30) Priorität: **03.08.83 DE 3328031**

(43) Veröffentlichungstag der Anmeldung: **18.09.85**
**Patentblatt 85/38**

(84) Benannte Vertragsstaaten: **DE FR GB SE**

(71) Anmelder: **IBP Pietzsch GmbH, Hertzstrasse 32-34,
D-7505 Ettlingen (DE)**

(72) Erfinder: **Pietzsch, Ludwig, Dr.-Ing., Im Rosengärtle 14,
D-7600 Karlsruhe (DE)**
Erfinder: **Kauer, Harald, Dr.-Ing., Schauinslandstrasse 6,
D-7505 Ettlingen (DE)**
Erfinder: **Düren, Johannes, Dipl.-Phys.,
Lebrechtstrasse 22, D-7500 Karlsruhe 51 (DE)**
Erfinder: **Kühn, Hugo, Karl-Friedrich-Strasse 18,
D-7505 Ettlingen (DE)**

(74) Vertreter: **Liesegang, Roland, Dr.-Ing., Sckellstrasse 1,
D-8000 München 80 (DE)**

(54) Vorrichtung zur Positionierung und Lagestabilisierung.

(57) Eine Vorrichtung zur Positionierung und Lagestabilisierung einer schwenkbar auf einer Unterlage gelagerten trägen Masse mit zwei von einem Motor (1) über regelbare Reibkupplungen (9; 13) antreibbaren Abtriebsteilen (11; 15) weist einen einzigen, von dem Motor (1) angetriebenen Rotor (5) auf, der mit den beiden Reibkupplungen zur Übertragung eines Kupplungsmomentes im gleichen Drehsinne zusammenwirkt. Jedes Abtriebsteil (11; 15) wirkt je über ein gesondertes Getriebe (16–18; 20–23), von denen eines eine Drehrichtungsumkehr bewirkt, auf die Masse ein.

0154672

IBP PIETZSCH GMBH

Ettlingen, Bundesrepublik Deutschland

EU 005 63

- 1 -

Vorrichtung zur Positionierung und Lagestabilisierung

Die Erfindung betrifft eine Vorrichtung zur Positionierung und Lagestabilisierung einer schwenkbar auf einer Unterlage, wie einem Fahrzeugaufbau, gelagerten trägen Masse, wie einer Rohrwaffe, mit zwei von einem Motor je über einen Rotor und eine regelbare Reibkupplung antreibbaren Abtriebsteilen, über welche die Masse wahlweise in einer der beiden Schwenkrichtungen in eine vorgegebene Schwenklage verschwenkbar ist.

Vorrichtungen dieser Art (DE-PS 22 17 684, 27 27 582) weisen jeweils zwei gegensinnig drehbare, ständig angetriebene Rotoren auf, die über ein Getriebe mit zwei gegensinnig drehenden Antrieben vom Motor angetrieben sind. Mit jedem der Rotoren wirkt eine der beiden Reibkupplungen geregelt zusammen, so daß Momente in beiden Drehrichtungen auf die Masse übertragen werden können. Bei dieser Art der Positionierung und Stabilisierung der Masse muß der stets auf hoher Drehzahl laufende Motor ständig das den beiden Rotoren vorgeschaltete Getriebe treiben. Die Motordrehzahl wird auf einem hohen Niveau konstant gehalten, damit stets ein zu einer schnellen Richtungsänderung der Masse erforderliches Moment zur Verfügung auf einem Drehzahlniveau steht, das größer ist als die zu erwartende Störwinkelgeschwindigkeit bzw. die gewünschte Richtwinkelgeschwindigkeit. Bei einer Leistungsübertragung über die Kupplung tritt ein hoher Schlupf auf, was zu einer hohen Verlustleistung in der Kupplung führt,die vom Motor aufgebracht werden muß.

Die Tatsache, daß der stets auf hoher Drehzahl laufende Motor die Reibkupplungen über ein gemeinsames Getriebe antreibt,führt zu hohem Aufwand bei der Konstruktion des Getriebes.

Dies gilt auch für eine andere bekannte Vorrichtung zur Positionierung und Lagestabilisierung einer trägen Masse, bei welcher der Motor nur einen einzigen Rotor antreibt. Hierbei wird von dem Rotor auf die Masse von jeder der beiden Reibkupplungen ein Moment in entgegengesetztem Sinne über einen mit der Masse festen gabelartigen Mitnahmerahmen übertragen (DE-PS 27 49 913). Dies bedingt eine außermittige Anordnung der Reibkupplungen bezüglich des Rotors und überdies eine außermittige,platzaufwendige Anordnung des Rotors in Bezug auf die Schwenkachse der Masse.

Der Erfindung liegt die Hauptaufgabe zugrunde, eine Vorrichtung der eingangs beschriebenen Art zu schaffen, die einfacher im Aufbau ist, weniger Aufwand an Energie und Wartung bedarf und trotzdem alle Anforderungen hinsichtlich Lagestabilisierung und schnellem und genauem Positionieren der Masse in eine vorgegebene Schwenklage durch geregeltes Kuppeln einer der beiden Reibkupplungen ermöglicht.

Zur Lösung dieser Aufgabe ist gemäß der Erfindung vorgesehen, daß nur ein einziger Rotor vorgesehen ist, daß die beiden Reibkupplungen so bezüglich des Rotors angeordnet sind, daß der Rotor auf die Abtriebsteile beider Reibkupplungen ein gleichgerichtetes Drehmoment überträgt, und daß die Abtriebsteile der beiden Reibkupplungen je über ein gesondertes Getriebe, von denen eines eine Drehrichtungsumkehr bewirkt, auf die träge Masse einwirken.

Mit der Erfindung wird eine kompakte, mit der Schwenkachse der Masse zentrierbare Vorrichtung der eingangs beschriebenen Art geschaffen, bei welcher von dem Motor bei nicht betätigter Kupplung nur der einzige Rotor getrieben wird, ohne daß dabei ein vorgeschaltetes Getriebe mitgedreht werden muß. Dies vereinfacht die Konstruktion beträchtlich, ohne daß dadurch die wie üblich (z.B. gemäß DE-PS 27 27 582) durchgeführte Lage- bzw. Geschwindigkeitsregelung beeinträchtigt wird.

Bei den eingangs beschriebenen bekannten Vorrichtungen (DE-PS 22 17 684, 27 27 582) ist der an den Reibkupplungen auftretende Schlupf wie gesagt groß ., was sowohl zu einer hohen Verlustleistung als auch zu hoher thermischer Belastung und damit hohem Verschleiß und Wartungsaufwand der Reibkupplungen führt.

Im Rahmen der Verringerung des Energie- und Wartungsaufwandes soll mit der Erfindung deshalb auch die in den Reibkupplungen anfallende Verlustleistung sowie die dadurch bedingte thermische Belastung der Reibkupplungen abgesenkt werden.

Zur Lösung dieser Unteraufgabe sind gemäß einem wesentlichen Aspekt der Erfindung zum Erfassen der Motordrehzahl und der masseseitigen Drehzahl auf der Abtriebsseite der Reibkupplungen Aufnehmer vorgesehen, und die Motordrehzahl wird an die masseseitige Drehzahl mittels eines zusätzlichen Motordrehzahlregelkreises angepaßt. Dieser zum Lage- bzw. Geschwindigkeitsregelkreis für die träge Masse erfindungsgemäß zusätzliche Motordrehzahlregelkreis hat auch für sich allein Bedeutung, d.h. führt auch ohne Anwendung der Merkmale des Kennzeichens des Anspruchs 1 zu einer wesentlichen Verminderung des Energie-und Wartungsaufwandes.

Bei einer vorteilhaften Ausgestaltung, bei welcher der Motorregelkreis von dem Lage- oder Geschwindigkeitsregelkreis entkoppelt ist, wird die Motordrehzahl bei Anwachsen der masseseitigen Drehzahl der Reibkupplung durch Nachspeisen von Strom angehoben.

Wenn die Richtsignale größer werden als die z.B. von den Bewegungen der Unterlage herrührenden Störsignale, ist eine Sollwertbegrenzung für den Lage- oder Geschwindigkeitsregelkreis zweckmäßig, welche dem Motor Zeit zum Hochlaufen läßt, um das gewünschte Richtmoment aufzubringen. In diesem Fall wird die Motordrehzahl bei Vorgabe eines Richtgriffsignals durch Nachspeisen von Strom angehoben. Der Motorregelkreis und der Lage- oder Geschwindigkeitsregelkreis sind also in diesem Fall nicht mehr voll entkoppelt.

Die Motorregelung gemäß der Erfindung bewirkt, daß der Motor stets auf eine Drehzahl geregelt wird, die nur geringfügig oberhalb der zum Aufbringen des jeweils gewünschten Drehmomentes erforderlichen Mindestdrehzahl liegt. Dies vermindert gegenüber der bekannten Regelung mit stets konstanter, hoher Motordrehzahl entscheidend den Schlupf und damit die Verlustleistung, d. h. den Energieverbrauch.

Ferner ist ein Vorteil, daß weiche Übertragungsmittel, wie Zahnriemen, zwischen dem Motor und dem Rotor vorgesehen sein können. Dies erhöht den konstruktiven Spielraum bzw. ermöglicht eine besonders platzsparende Anordnung des Motors.

Bei einer Vorrichtung der beschriebenen Art sind zusätzlich Vorkehrungen nötig, um die Masse in einer Ruhestellung bzw. in einer gewünschten Schwenklage blockieren zu können und um die Masse beispielsweise bei Ausfall des Motors oder beim erstmaligen Einstellen auf eine ungefähre Schwenklage einrichten zu können. Eine Vorrichtung gemäß der Erfindung weist zu diesem Zweck zusätzlich eine mit der Masse verbundene Baugruppe aus einer Zurrbremse zum Blockieren der Masse gegen eine Schwenkbewegung und einen Hilfsantrieb zum Verschwenken der Masse bei stehendem Motor, insbesondere von Hand, auf.

Eine solche Baugruppe ist an sich bekannt (DE-PS 27 58 596). Die bekannte Baugruppe wird über ein in einer Kraftflußrichtung, beispielsweise mittels einer Bremse hemmbares Getriebe direkt zwischen der trägen Masse und der Unterlage vorgesehen, wobei an der Eingangsseite des Getriebes eine Handkurbel über eine zusätzliche Kupplung ankuppelbar angeordnet ist.

Diese bekannte Baugruppe schafft beim Übergang von Motorbetrieb auf Blockierung bzw. Zurrung oder auf den Hilfsantrieb (Handantrieb) undefinierte Zustände. Um diese zu vermeiden und die genannte Baugruppe passiv, d. h. praktisch ohne Aufwand an Zusatzenergie (mit Ausnahme der Hilfsenergie für den Hilfsantrieb), betreiben zu können, ist gemäß einer Weiterbildung der Erfindung vorgesehen, daß die Baugruppe ein Planetengetriebe umfaßt, dessen Hohlrad mit der Masse betriebsmäßig verbunden ist, dessen Steg mit der gegen die Unterlage wirkenden Zurrbremse zusammenwirkt und dessen Sonnenrad über eine mechanisch lüftbare Federbremse mit dem Hilfsantrieb kuppelbar ist.

Eine besonders kompakte und mit der Stabilisierungsvorrichtung integrierte Konstruktion wird dadurch geschaffen, daß das Hohlrad über eines der beiden Getriebe mit der Masse betriebsmäßig verbunden ist.

Die Erfindung ist im folgenden anhand schematischer Zeichnungen an Ausführungsbeispielen näher erläutert. Es zeigen:

Fig. 1    ein Schema einer Vorrichtung gemäß der Erfindung;

Fig. 2    einen Schnitt durch eine ausgeführte Konstruktion nach dem Schema gemäß Fig. 1 und

Fig. 3    ein Regelschema für eine erfindungsgemäße Regelung der Motordrehzahl.

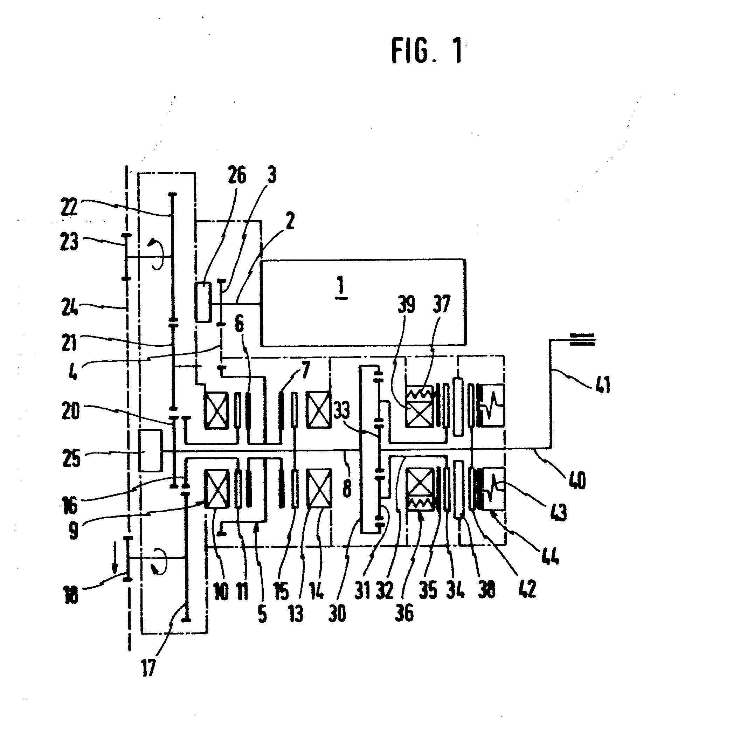

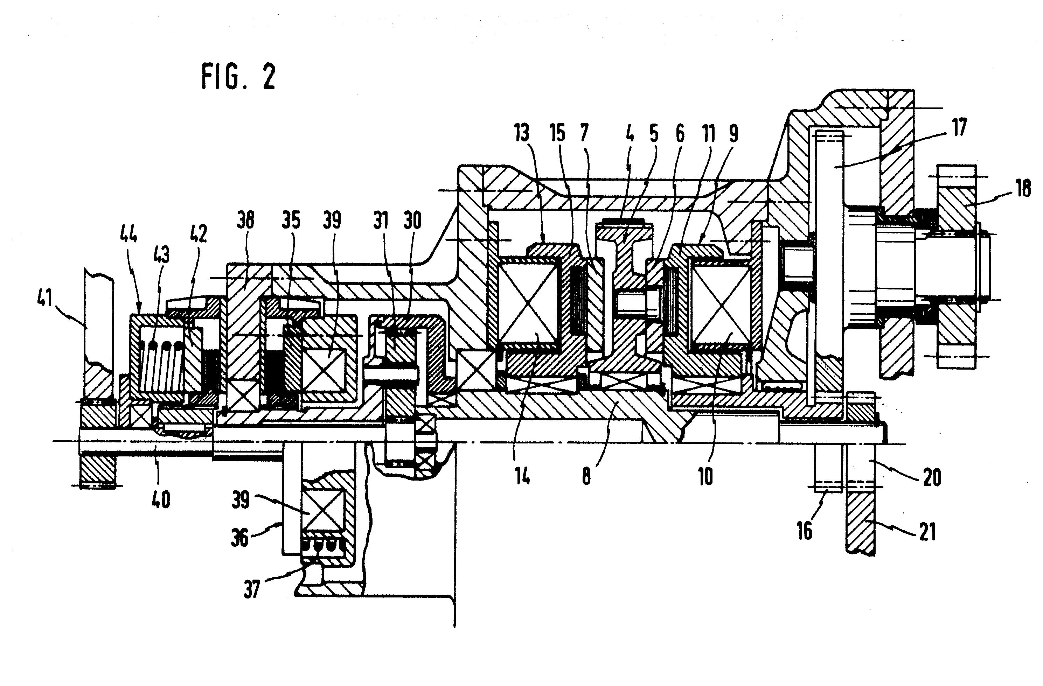

In Fig. 1 und 2 treibt ein Motor 1 über seine Abtriebswelle 2 mit Zahnrad 3 über einen Zahnriemen 4 einen Rotor 5 mit Rotorscheiben 6, 7. Der Rotor ist drehbar auf einer zentralen Welle 8 gelagert. Mit der Außenseite der Rotorscheibe 6 wirkt eine Elektromagnetkupplung 9 mit feststehender Wicklung 10 und einem drehbaren Abtriebsteil 11 zusammen. In gleicher Weise wirkt mit der Rotorscheibe 7 eine Elektromagnetkupplung 13 mit feststehender Wicklung 14 und drehbarem Abtriebsteil 15 zusammen. Das Abtriebsteil 15 ist fest mit der zentralen Welle 8 verbunden. Jeweils das Abtriebsteil 11, 15 oder die Rotorscheibe 6, 7 ist mit einem Reibbelag versehen.Die Drehachsen der Abtriebsteile oder -ringe 11,15 fluchten mit der Drehachse des Rotors 5 und der Welle 8. Das Abtriebsteil 11 trägt ein Zahnrad 16, welches mit einem Zahnrad 17 größeren Durchmessers in Eingriff ist. Dieses Zahnrad 17 ist fest mit einem Abtriebsritzel 18 verbunden. Die Zahnräder 16 bis 18 bilden ein erstes Getriebe.

Auf der zentralen Welle 8 ist ein Zahnrad 20 gleichen Durchmessers wie das Zahnrad 16 befestigt. Dieses Zahnrad 20 ist mit einem Zwischenrad 21 in Eingriff, welches seinerseits mit einem Zahnrad größeren Durchmessers 22 in Eingriff steht. Das Zahnrad 22 treibt ein Abtriebsritzel 23. Die Zahnräder 20 bis 23 bilden ein zweites Getriebe.

Beide Abtriebsritzel 18,23 kämmen mit einem Zahnkranz 24, der fest mit einer Rohrwaffe ist. Die Mitte dieses Zahnkranzes kann mit der zentralen Achse 8 zusammenfallen. Notwendig ist dies jedoch nicht. Eine außermittige Anordnung der Welle 8 kann aus Platzgründen bevorzugt sein.

Wird die Elektromagnetkupplung 9 betätigt, so wird die Rotorscheibe 6 mit dem Abtriebsteil 11 und mit dem ersten Getriebe 16,17,18 gekuppelt, so daß der Zahnkranz 24 über dieses erste Getriebe in der einen Richtung verdreht wird.

Wird die Elektromagnetkupplung 13 betätigt, so wird der Motor 1 mit dem Abtriebsteil 15 und damit über die zentrale Welle 8 mit dem zweiten Getriebe 20 bis 23 gekuppelt, so daß der Zahnkranz 24 über das Abtriebsritzel 23 dieses zweiten Getriebes angetrieben wird. Wegen des Zwischenrades 21 wird dabei der Zahnkranz 24 in entgegengesetztem Drehsinn getrieben wie über das Abtriebsritzel 18. Dieses Abtriebsritzel 18 und damit das erste Getriebe werden vom Drehkranz mitgenommen, wodurch ein in entgegengesetzter Richtung wie das Antriebsmoment wirkendes Widerstandsmoment am Zahnkranz erzeugt wird. Dies sorgt für eine erwünschte Drehmomentverspannung, welche im Betrieb nachteilige Zahnspiele aufhebt.

Mit den Bezugszahlen 25 und 26 sind Drehzahlaufnehmer in Form von Tachogeneratoren bezeichnet.

Der Tachogenerator 25 erfaßt die Drehzahl der zentralen Welle 8 und damit der trägen Masse. Die Drehzahl der Welle 2 und damit des Motors 1 wird mittels des Tachogenerators 26 ermittelt.

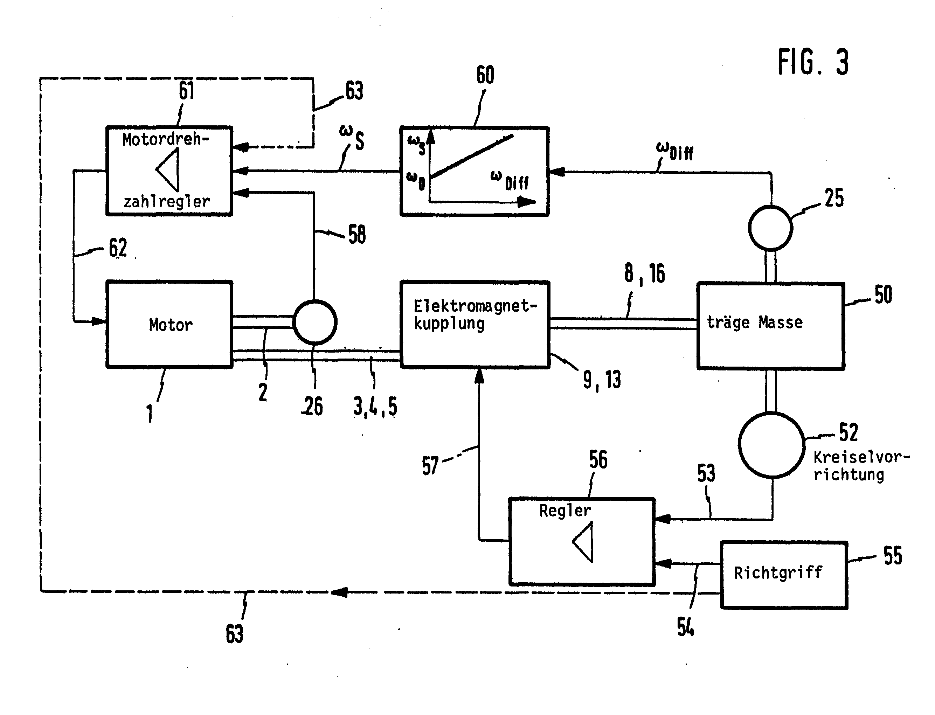

Die Anordnung der Tachogeneratoren 25,26 in einem Regelschema ist später anhand der Fig. 3 erläutert.

An die Welle 8 ist ein Planetengetriebe angeschlossen. Das Hohlrad 30 dieses Planetengetriebes ist fest mit der Welle 8 verbunden. Die Planeten 31 sind auf einem Steg 32 gelagert, welcher eine Scheibe 34 trägt. Die Scheibe 34 wird über eine Ankerscheibe 35 einer Elektromagnetbremse 36 von einer Druckfeder 37 gegen eine stationäre Scheibe 38 gedrückt gehalten. Wird die Wicklung 39 der Elektromagnetbremse 36 erregt, so wird die Scheibe 34 gegen die Kraft der Druckfeder 37 von der stationären Scheibe 38 weg bewegt.

Das Sonnenrad 33 des Planetengetriebes ist fest mit einer Welle 40, welche mit der zentralen Welle 8 fluchtet. Auf der Welle 40 sitzen eine Handkurbel 41 und ferner eine Scheibe 42, welche mittels der Druckfeder 43 einer Federbremse 44 in Anlage gegen die stationäre Scheibe 38 gedrückt ist. Die Federbremse 44 ist mechanisch auf bekannte, hier nicht dargestellte Weise lösbar, derart, daß die Scheibe 42 von der Scheibe 38 weggestellt werden kann.

Bei Normalbetrieb, d. h. bei laufendem Motor 1, ist die Elektromagnetbremse 36 gelüftet und die Federbremse 44 angezogen. Die Welle 40 und damit das Sonnenrad 33 sind also gegen Drehung festgehalten, während der Steg 32 drehen kann. Damit ist auch das Hohlrad 30 frei zu einer Drehung mit der Welle 8. Wenn der Motor 1 unbetätigt ist, ist die Wicklung 39 der Elektromagnetbremse nicht mehr erregt, so daß die Scheibe 34 durch die Druckfeder 37 an die stationäre Scheibe 38 gepreßt wird. Dadurch ist der Steg 32 gegegen Drehung blockiert. Da auch das Sonnenrad 33 mittels der Federbremse 40 blockiert ist, sind die Welle 8 und damit das zweite Getriebe 20 bis 23, der Zahnkranz 24 und somit schließlich auch die Masse gegen eine Schwenkung blockiert.

Soll die Masse von Hand geschwenkt werden, wird die Federbremse 44 mechanisch gelüftet. Hierdurch wird die Welle 40 entblockiert und kann über die Handkurbel 41 das Sonnenrad 33 in Drehung versetzen, welches über die an Ort und Stelle drehenden Planeten 31 (der Steg 32 ist blockiert) das Hohlrad 30 und damit die zentrale Welle 8 antreibt. Diese dreht über das zweite Getriebe 20 bis 23 den Zahnkranz 24 und damit die Masse.

Aufgrund der beschriebenen Konstruktion sind jegliche undefinierten Zustände der Masse zwischen Normalbetrieb über den Motor 1, Blockierzustand und Handbetrieb über die Kurbel 41 ausgeschlossen.

Anhand der Fig. 3 sei nun ein Regelschema beschrieben, welches außer der Regelung der Reibkupplungen 9,13 eine Regelung der Drehzahl des Motors 1 ermöglicht. Ein erster Regelkreis für die Regelung der Lage- oder Drehgeschwindigkeit der trägen Masse 50 umfaßt eine fest mit der trägen Masse 50 verbundene Kreiselvorrichtung 52. Die Kreiselvorrichtung liefert ein Ist-Signal 53, welches proportional der Drehgeschwindigkeit der trägen Masse 50 ist. Ein Soll-Signal 54 für die Soll-Drehgeschwindigkeit oder die Soll-Lage der trägen Masse 50 wird über einen Richtgriff 55 oder über eine nicht gezeigte Führungsanlage vorgegeben. Die Signale 53,54 werden einem Lage- oder Geschwindigkeitsregler 56 zugeführt. Dieser vergleicht in üblicher Weise das Ist-Signal mit dem Soll-Signal und bildet aus der Regelabweichung ein Regelsignal 57 für die Reibkupplungen 9,13, die in Fig. 3 durch einen Kasten symbolisiert sind. Über die zentrale Welle 8 oder über das Zahnrad 16 wird die Ist-Lage oder die Ist-Drehgeschwindigkeit der trägen Masse 50 entsprechend dem Regelsignal 57 beeinflußt.

Ein zweiter Regelkreis für die Regelung der Motordrehzahl des Motors 1 umfaßt die beiden Tachogeneratoren 25,26 als Istwert-Aufnehmer 25 für den Drehgeschwindigkeitsunterschied $\omega_{Diff}$ zwischen der trägen Masse 50 und der nicht gezeigten Unterlage, z. B. einer Rohrwaffe oder einem Turm gegenüber einem Fahrzeugchassis, sowie 26 zum Erfassen der Drehzahl des Motors 1. Der Tachogenerator 26 ist über die Welle 2 mit dem Motor 1 gekoppelt. Die von dem Tachogenerator gelieferte

- 10 -

0154672

Differenz-Winkelgeschwindigkeit $\omega_{Diff}$ wird einem Sollwert-generator 60 zugeführt, in dem ein Soll-Signal $\omega_S$ nach dem im Kasten gezeigten linearen Zusammenhang zwischen $\omega_S$ und $\omega_{Diff}$ gebildet wird. Dabei wird bei $\omega_{Diff}$ gleich Null, d. h. bei gegenüber der Unterlage nicht drehender trägen Masse, der Motor auf einer kleinen Mindestge-schwindigkeit entsprechend $\omega_0$ gehalten. Bei Ansteigen der Winkelgeschwindigkeit der trägen Masse gegenüber der Unterlage, d. h. bei wachsendem $\omega_{Diff}$ wird der Sollwert $\omega_S$ nach dem gezeigten linearen Zusammenhang vergrößert.

Der so gebildete Sollwert $\omega_S$ wird einem Motordrehzahl-regler 61 zugeführt, welcher aus der Regelabweichung, d. h. der Differenz zwischen den Signalen $\omega_S$ und 58 ein Regelsignal 62 bildet, welches dem Motor 1 zugeführt wird. Der Motor beeinflußt über die schematisch in Fig. 3 als Welle gezeichnete Anordnung aus Ritzel 3, Riementrieb 4 und Rotor 5 wahlweise die Kupplungen 9,13, so daß das Ergebnis der Motordrehzahlregelung in die Lageregelung der trägen Masse 50 miteinfließt. Davon abgesehen ist aber der Motordrehzahl-Regelkreis mit dem Regler 61 von dem Lage- oder Geschwindigkeitsregelkreis mit dem Regler 56 bei dem bisher besprochenen Regelschema entkoppelt.

In Fig. 3 ist durch eine gestrichelte Linie angedeutet, daß ein Soll-Signal 63 zusätzlich über den Richtgriff 55 dem Motordrehzahlregler 61 zugeführt wird. Dies stellt eine zusätzliche Möglichkeit dar, die dann von Bedeutung ist, wenn die Soll-Richtsignale 54 größer als die verarbeitbaren Ist-Störsignale 53 werden. Für diesen Fall ist über das gestrichelte Signal 63 eine Sollwertbegrenzung in der Weise möglich, daß z. B. durch eine nicht gezeigte Logik das Sollwertistsignal 54 für den Lage- oder Geschwindigkeitsregler 56 derart beeinflußt wird, daß zunächst die Motordrehzahl auf das Richtgriffsignal 63 hin durch
Nachspeisen von Strom auf einen Wert angehoben wird,
welcher für das Erzeugen des geforderten Momentes ausreicht.

Bei dieser zuletzt beschriebenen Alternative sind die
beiden Regelkreise, nämlich der Motordrehzahl-Regelkreis mit dem Regler 61 und der Lage- oder Geschwindigkeits-Regelkreis mit dem Regler 56 miteinander verkoppelt. Eine derartige Koppelung ist nicht zwingend
sondern stellt nur eine Alternative dar, welche
nur dann erforderlich ist, wenn sich aufgrund der
beschriebenen Verhältnisse und Bedingungen bei einem
bestimmten Fahrzeugtyp die genannte Sollwertbegrenzung
als notwendig erweisen sollte.

In allen Fällen läßt sich mit dem Regelschema nach
Fig. 3 der Schlupf an den Kupplungen 9,13 für alle
Betriebszustände, d.h. auch bei großen $\omega_{Diff}$ der
trägen Masse durch die beschriebene Regelung der Motordrehzahl des Motors 1 konstant und niedrig halten, so
daß die Verlustleistung klein gehalten werden kann.
Der Motordrehzahlregler 61 läßt sich dabei besonders
einfach für den Fall gestalten, daß die Motordrehzahl
nur in einer Richtung beeinflußt wird, z. B. angehoben
wird.

Da bei der beschriebenen Vorrichtung die vom Motor 1
zu beschleunigende Massen (der Teile 2 bis 7 gemäß
Fig. 1 und 2) vergleichsweise klein sind, kann der
Motor sehr schnell beschleunigen. Erst dies ermöglicht
die oben beschriebene alternative Betriebsart, wonach der Motor 1 erst nach Vorgabe des Richtsignales 63
aktiviert wird, wonach dann die Elektromagnetbremse 36
gelüftet wird.

- 13 -

Ansprüche

1. Vorrichtung zur Positionierung und Lagestabilisierung einer schwenkbar auf einer Unterlage, wie einem Fahrzeugaufbau, gelagerten trägen Masse, wie einer Rohrwaffe, mit zwei von einem Motor je über einen Rotor und eine regelbare Reibkupplung antreibbaren Abtriebsteilen, über welche die Masse wahlweise in einer ihrer beiden Schwenkrichtungen in eine vorgegebene Schwenklage verschwenkbar ist, dadurch g e k e n n - z e i c h n e t, daß nur ein einziger Rotor (5) vorgesehen ist, daß die beiden Reibkupplungen (9;13) so bezüglich des Rotors (5) angeordnet sind, daß der Rotor auf die Abtriebsteile (11;15) beider Reibkupplungen ein gleichgerichtetes Drehmoment überträgt, und daß die Abtriebsteile (11;15) der beiden Reibkupplungen je über ein gesondertes Getriebe (16-18;20-23), von denen eines eine Drehrichtungsumkehr bewirkt, auf die träge Masse einwirken.

2. Vorrichtung nach Anspruch 1, dadurch g e k e n n - z e i c h n e t, daß die Reibkupplungen (9;13), der Rotor (5) und ggf. die träge Masse miteinander fluchtende Drehachsen haben und die Getriebe (16-18; 20-23) Zahnradgetriebe sind, die mit ihren Abtriebsritzeln (18;23) auf einen massenfesten Zahnkranz (24) wirken und von denen eine ein zusätzliches Zwischenrad (21) aufweist.

3. Vorrichtung, insbesondere nach Anspruch 1 oder 2, dadurch g e - k e n n z e i c h n e t, daß zwei Aufnehmer (25;26) zum Erfassen der Motordrehzahl und der masseseitigen Drehzahl auf der Abtriebsseite der Reibkupplungen (9;13) vorgesehen sind, und daß die Motordrehzahl an die masseseitige Drehzahl mittels eines Motordrehzahlregelkreises angepaßt wird.

4. Vorrichtung nach Anspruch 3, dadurch g e k e n n - z e i c h n e t, daß die Motordrehzahl bei Anwachsen der masseseitigen Drehzahl der Reibkupplung durch Nachspeisen von Strom angehoben wird.

5. Vorrichtung nach Anspruch 3, dadurch g e - k e n n z e i c h n e t, daß die Motordrehzahl bei Vorgabe eines Richtgriffsignales durch Nachspeisen von Strom angehoben wird.

6. Vorrichtung nach einem der Ansprüche 1 bis 5, dadurch g e k e n n z e i c h n e t, daß mit der Masse eine Baugruppe aus einer Zurrbremse (36) zum Blockieren der Masse gegen eine Schwenkbewegung und einem Hilfsantrieb (41) zum Verschwenken der Masse bei stehendem Motor (1), insbesondere von Hand, verbunden ist.

7. Vorrichtung nach Anspruch 6, dadurch g e k e n n - z e i c h n e t, daß die Baugruppe ein Planetengetriebe umfaßt, dessen Hohlrad (30) mit der Masse betriebsmäßig verbunden ist, dessen Steg (32) mit der gegen die Unterlage (Scheibe 38) wirkenden Zurrbremse (36) zusammenwirkt und dessen Sonnenrad (33) über eine mechanisch lüftbare Federbremse (44) mit dem Hilfsantrieb (41) kuppelbar ist.

8. Vorrichtung nach Anspruch 7, dadurch g e k e n n -
   z e i c h n e t, daß das Hohlrad (30) über eines
   der beiden Getriebe (16-18;20-23) mit der Masse
   betriebsmäßig verbunden ist.

FIG. 1

FIG. 2

2/3

01546'72

FIG. 3

0154672